# EUROPÄISCHE PATENTSCHRIFT

(11) **EP 2 096 346 B1**
(45) Veröffentlichungstag und Bekanntmachung des Hinweises auf die Patenterteilung: **15.04.2015**
(21) Anmeldenummer: 09100079.4
(22) Anmeldetag: 27.01.2009
(51) Int. Cl.: F16L 5/04, H02G 3/22, E04G 15/06

(54) **Leitungsdurchführung zum Durchführen von Leitungen durch ein Bauteil**
Lines pass-through to guide lines through a component
Passage de ligne destiné à passer des lignes à travers un composant

(30) Priorität: 27.02.2008 DE 102008000420
(43) Veröffentlichungstag der Anmeldung: 02.09.2009
(73) Patentinhaber: HILTI Aktiengesellschaft, 9494 Schaan (LI)
(72) Erfinder: Monden, Thomas, 87778, Stetten (DE); Viermann, Christian, 80997 München (DE)
(74) Vertreter: Hilti Aktiengesellschaft Corporate Intellectual Property

(56) Entgegenhaltungen:
- EP-A1- 1 495 248
- EP-A2- 1 108 936
- EP-A2- 1 847 747
- WO-A1-03/000494
- DE-A1- 10 043 430
- DE-A1-102004 014 347
- GB-A- 2 424 693
- US-A1- 2004 045 234

## Beschreibung

Die Erfindung betrifft eine Leitungsdurchführung zum Durchführen von Leitungen durch ein Bauteil mit einem umfänglich geschlossenen Gehäuse, das einen Durchführraum für die Leitungen umgibt, wobei im Gehäuse eine Einlage aus intumeszierenden Material sowie ein erstes, membranartiges und mit einer Durchtrittsstelle versehenes Dichtelement aus einem elastischen Material vorgesehen sind.

Derartige Leitungsdurchführungen dienen dem Durchführen von Leitungen, wie z. B. Rohrleitungen, Kabeln oder Kabelkanälen, durch Bauteile, wie z. B. durch Decken oder Wände.

Derartige Leitungsdurchführungen werden beim Erstellen des Bauteils in dieses eingebaut. Insbesondere können die Leitungsdurchführungen in Betondecken oder -wände eingegossen werden. Derartige Leitungsdurchführungen sind durch die Einlage aus einem intumeszierenden Material mit einer Brandschutzfunktion ausgerüstet. Vom Zeitpunkt des Einbaus beziehungsweise des Eingiessens in das Bauteil über die Installation der Leitung durch die Leitungsdurchführung bis hin zur Fertigstellung des Gebäudes besteht daher bereits ein Brandschutz.

Neben Flammen mit hohen Temperaturen entstehen im Brandfall auch Rauchgase, die bis zur Aktivierung des intumeszierenden Materials durch einen Ringspalt zwischen einer durch die Leitungsdurchführung hindurchgeführten Leitung und der Innenwandung des Gehäuses der Leitungsdurchführung in benachbarte Räume dringen kann.

Die EP 1 847 747 A2 offenbart eine Leitungsdurchführung gemäß dem Oberbegriff von Anspruch 1.

Aus der EP 1 495 248 A1 ist eine Leitungsdurchführung zum Durchführen von Leitungen durch ein Bauteil mit einem umfänglich geschlossenen Gehäuse bekannt, das einen Durchführraum für die Leitungen umgibt, wobei im Gehäuse eine Einlage aus einem intumeszierenden Material sowie ein Dichtring aus einem Elastomer-Material vorgesehen sind. Der Dichtring liegt an einer durchgeführten Leitung an und dichtet den Ringspalt zwischen der Leitung und der Innenwandung des Gehäuses gegen Rauchgas ab.

Nachteilig an der bekannten Lösung ist, dass im Brandfall entstehende Heissrauchgase, d. h. Rauchgase mit hohen Temperaturen, den Dichtring aus einem Elastomer-Material wegschmelzen, bevor die intumeszierende Masse aktiviert und der Durchführraum von dieser verschlossen ist. Durch den Ringspalt kann dann das heisse Rauchgas hindurchströmen, wodurch das Abschmelzen der Leitung auf der Seite des Bauteils, die nicht dem Feuer ausgesetzt ist, beschleunigt wird. Ist die Leitung weggeschmolzen und das intumeszierende Material noch nicht expandiert, kann durch die geschaffene Öffnung Rauchgas und gegebenenfalls Flammen ungehindert auf die andere Seite des Bauteils gelangen.

Aufgabe der Erfindung ist es, eine Leitungsdurchführung zu schaffen, bei welcher der Durchtritt von Kalt- wie auch von Heissrauchgas bis zur Aktivierung des intumeszierenden Materials weitgehend reduziert ist.

Die Aufgabe ist durch die Merkmale des unabhängigen Anspruchs gelöst. Vorteilhafte Weiterbildungen sind in den Unteransprüchen dargelegt.

Gemäss der Erfindung ist im Gehäuse ein weiteres membranartiges und mit einer Durchtrittsöffnung versehenes Dichtelement aus einem textilen Flachmaterial vorgesehen, das eine Übergangstemperatur von mindestens 600° C aufweist.

Mit dem weiteren Dichtelement weist die Leitungsdurchführung eine zusätzliche Dichtebene auf, wobei das erste Dichtelement aus einem elastischen Material die Kaltrauchgasdichtigkeit und das weitere Dichtelement aus dem textilen Flachmaterial die Heissrauchgasdichtigkeit sicherstellt beziehungsweise den Durchtritt von Heissrauchgas weitgehend verhindert. Sobald die Aktivierungstemperatur der Einlage aus intumeszierenden Material erreicht ist, wird der Durchführungsraum von dem expandierenden Material vollständig verschlossen. Dabei wird ein Wegschmelzen der hindurchgeführten Leitung auf der Nicht-Feuerseite verhindert.

Unter Übergangstemperatur wird die Temperatur verstanden, bei der das textile Flachmaterial versprödet. Das textile Flachmaterial ist somit in Bezug auf im Brandfall auftretende Temperaturen nicht brennbar. Das im Brandfall versprödete, verbleibende textile Flachmaterial verhindert weiterhin einen ungehinderten Durchtritt von Heissrauchgasen durch den Ringspalt zwischen der hindurchgeführten Leitung und der Innenwandung des Gehäuses der Leitungsdurchführung.

Das erste Dichtelement aus einem elastischen Material ist beispielsweise ringförmig ausgebildet, wobei der Innendurchmesser der Durchtrittsstelle ein wenig kleiner als der kleinste Aussendurchmesser der hindurchzuführenden Leitung ist. Alternativ ist das erste Dichtelement scheibenförmig ausgebildet und weist an der Durchtrittsstelle eine Sollbruchstelle auf, welche beim Hindurchführen einer Leitung aufbricht und das Hindurchführen durch das erste Dichtelement ermöglicht.

Die Durchtrittsöffnung des weiteren Dichtelementes aus einem textilen Flachmaterial weist derartige Abmessungen auf, dass im hindurchgeführten Zustand der Leitung dieses Dichtelement am Aussendurchmesser dieser Leitung anliegt.

Vorzugsweise weist das textile Flachmaterial eine Dicke von 0.1 mm bis 1.0 mm auf, womit das Flachmaterial eine ausreichende Flexibilität für ein dichtendes Anliegen an dem Aussendurchmesser einer durch die Leitungsdurchführung hindurchgeführten Leitung aufweist. Vorteilhaft weist das textile Flachmaterial eine Dicke von 0.3 mm bis 0.5 mm auf.

Erfindungsgemäß ist das textile Flachmaterial ein Gewebe aus Glasfasern, das flexibel ist und eine Übergangstemperatur von mehr als 1'000° C aufweisen kann. Derartige Gewebe verspröden im Brandfall in einer vorteilhaften Weise und dichten den Ringspalt auch in diesem Zustand in einer vorteilhaften Weise ab.

Erfindungsgemäß ist das textile Flachmaterial mit einer Beschichtung versehen, womit eine vorteilhafte Dichtigkeit der zusätzlich geschaffenen Dichtebene auch gegenüber Kaltrauchgas vorhanden ist.

Erfindungsgemäß ist die Beschichtung ein Polyurethan (PU), das beim Aufbringen auf das textile Flachmaterial in vorteilhafter Weise allfällige Poren oder Öffnungen im textilen Flachmaterial verschliesst.

Vorzugsweise ist die Durchtrittsöffnung des weiteren Dichtelementes von flexiblen Lamellen gebildet, die durch vom Zentrum der Durchtrittsöffnung ausgehende, radial nach aussen verlaufende Schlitze gebildet sind. Damit ist der Umfangsbereich der Durchtrittsöffnung noch flexibel verformbar, so dass sich das weitere Dichtelement trotz der Fertigung aus einem textilen Flachmaterial einfach an den Aussendurchmesser der Leitung beim Hindurchführen derselben anpasst und eine vorteilhafte Abdichtung gegen Heissrauchgas gewährleistet ist.

Bevorzugt ist das weitere Dichtelement benachbart zum ersten Dichtelement angeordnet. Somit liegen beide Dichtebenen nebeneinander und stellen eine vorteilhafte Rauchgasdichtigkeit gegen Kalt- und Heissrauchgas sicher.

Vorzugsweise sind ausgehend von einem Ende des Gehäuses zuerst das erste Dichtelement und dann das weitere Dichtelement vorgesehen, womit die Rauchgasdichtigkeit der Leitungsvorrichtung zusätzlich verbessert ist.

Bevorzugt sind metallische Lamellen im Gehäuse vorgesehen, die sich vom Gehäuse im Wesentlichen radial in den Durchführraum erstrecken und in axialer Richtung federbar sind sowie ausgehend vom dem einen Ende des Gehäuses vor dem ersten Dichtelement angeordnet sind. Nach dem Durchführen einer Leitung durch die Leitungsdurchführung liegen die Lamellen federbeaufschlagt an dem Aussendurchmesser der Leitung an. Durch diese Federkraft wird die im Brandfall weich werdende Leitung zusammengedrückt und der Durchführraum zusätzlich mechanisch verschlossen, womit der Durchtritt von Rauchgas und insbesondere von Heissrauchgas durch die Leitung beziehungsweise durch den Durchführraum der Leitungsdurchführung bis zur Expansion des intumeszierenden Materials reduziert ist.

Die Erfindung wird nachstehend anhand eines Ausführungsbeispiels näher erläutert. Es zeigen:
Fig. 1 Eine erfindungsgemässe Leitungsdurchführung in Explosionsdarstellung; und
Fig. 2 die Leitungsdurchführung im eingebauten Zustand in einem Längsschnitt.

Grundsätzlich sind in den Figuren gleiche Teile mit den gleichen Bezugszeichen versehen.

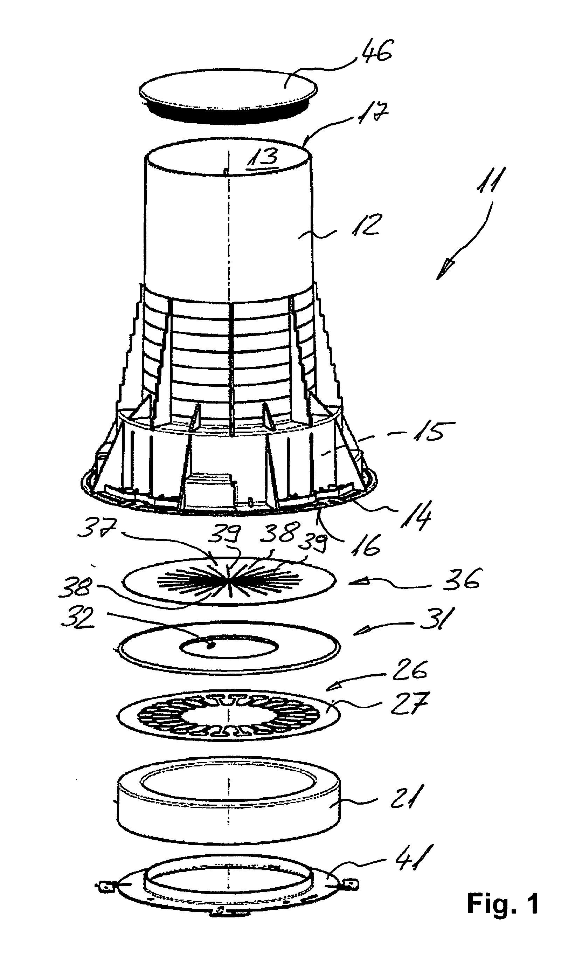

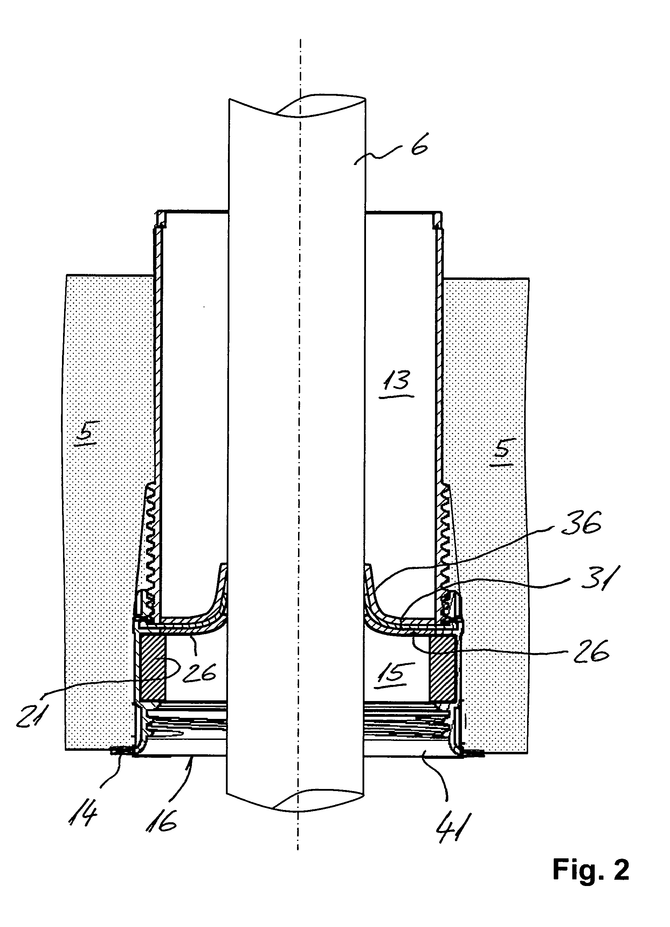

Die in den Figuren 1 und 2 dargestellte Leitungsdurchführung 11 zum Durchführen von Leitungen 6 wie ein Rohr durch eine Decke als Bauteil 5 weist ein umfänglich geschlossenes, rohrförmiges Gehäuse 12 auf, das einen Durchführraum 13 für die Leitung 6 umgibt. An einem ersten Ende 16 weist das Gehäuse 12 einen radial nach aussen abragenden Flansch 14 sowie daran anschliessend einen Aufnahmeraum 15 für eine ringförmige Einlage 21 aus einem intumeszierenden Material auf.

Ausgehend vom ersten Ende 16 des Gehäuses 12 sind anschliessend an die Einlage 21 aus einem intumeszierenden Material metallische Lamellen 26 im Gehäuse 12 vorgesehen, die sich vom Gehäuse 12 im Wesentlichen radial in den Durchführraum 13 erstrecken und in axialer Richtung federbar sind. Die metallischen Lamellen 26 sind beispielsweise aus einem Federstahl gestanzt und einteilig an einem ringförmigen Träger 27 vorgesehen.

Dann folgt ein erstes, membranartiges und mit einer Durchtrittsstelle 32 versehenenes erstes Dichtelement 31 aus einem elastischen Material. Das erste Dichtelement 31 ist ringförmig ausgebildet und beispielsweise aus einem Gummi gefertigt.

Anschliessend an das erste Dichtelement 31, direkt benachbart zu diesem ist ein zweites membranartiges und mit einer Durchtrittsöffnung 37 versehenes Dichtelement 36 aus einem textilen Flachmaterial im Gehäuse 12 vorgesehen. Das nicht-brennbare textile Flachmaterial ist ein Gewebe aus Glasfasern und weist eine Dicke von 0.1 mm bis 1.0 mm auf. Weiter ist das textile Flachmaterial mit Polyurethan (PU) beschichtet. Die Durchtrittsöffnung 37 des zweiten Dichtelementes 36 ist von flexiblen Lamellen 38 gebildet, die durch vom Zentrum der Durchtrittsöffnung 37 ausgehende, radial nach aussen verlaufende Schlitze 39 gebildet sind.

Das zweite Dichtelement 36, das erste Dichtelement 31, die metallischen Lamellen 26 und die Einlage 21 aus intumeszierenden Material liegen im zusammengesetzten Zustand der Leitungsdurchführung 11 im Aufnahmeraum 15 und werden mit einer ringförmigen Abdeckplatte 41 im Aufnahmeraum 15 des Gehäuses 12 weitgehend unverschieblich gesichert.

Zum Erstellen der Durchführung in einem gegossenen Bauteil 5 wird die Leitungsdurchführung 11 auf der Schalung des Bauteils 5 befestigt, wozu der radial abragende Flansch 14 des Gehäuses 12 vorteilhaft mit Nagellöchern (hier nicht dargestellt) versehen ist. Am zweiten Ende 17 des Gehäuses 12 wird ein Verschlussdeckel 46 vorgesehen, der beim Giessen des Bauteils 5 z. B. ein Eindringen von Beton in den Durchführraum 13 verhindert. Nach dem Aushärten des Bauteils 5 ist die Leitungsdurchführung 11 im Bauteil 5 fixiert.

Bei der Belegung der Leitungsdurchführung 11 mit einer Leitung 6 liegen die metallischen Lamellen 26 federbeaufschlagt sowie das erste Dichtelement 31 und das zweite Dichtelement 36 dichtend an dem Aussendurchmesser der Leitung 6 an (siehe Fig. 2). Die Leitungsdurchführung 11 ermöglicht einen vorteilhaften Brandschutz der Leitungsdurchführung mit vorteilhafter Kalt- und Heissrauchdichtigkeit.

## Patentansprüche

1. Leitungsdurchführung zum Durchführen von Leitungen (6) durch ein Bauteil (5) mit einem umfänglich geschlossenen Gehäuse (12), das einen Durchführraum (13) für die Leitungen (6) umgibt, wobei im Gehäuse (12) eine Einlage (21) aus intumeszierendem Material sowie ein erstes, membranartiges und mit einer Durchtrittsstelle (32) versehenes erstes Dichtelement (31) aus einem elastischen Material und ein weiteres membranartiges und mit einer Durchtrittsöffnung (37) versehenes Dichtelement (36) aus einem textilen Flachmaterial, das eine Übergangstemperatur von mindestens 600°C aufweist, vorgesehen ist, **dadurch gekennzeichnet, dass** das textile Flachmaterial ein Gewebe aus Glasfasern ist, welches mit einer Beschichtung versehen ist, wobei die Beschichtung ein Polyurethan (PU) ist.

2. Leitungsdurchführung nach Anspruch 1, **dadurch gekennzeichnet, dass** das textile Flachmaterial eine Dicke von 0.1 mm bis 1.0 mm aufweist.

3. Leitungsdurchführung nach Anspruch 1 oder 2, **dadurch gekennzeichnet, dass** die Durchtrittsöffnung (37) des weiteren Dichtelementes (36) von flexiblen Lamellen (38) gebildet ist, die durch vom Zentrum der Durchtrittsöffnung (37) ausgehende, radial nach außen verlaufende Schlitze (39) gebildet sind.

4. Leitungsdurchführung nach einem der Ansprüche 1 bis 3, **dadurch gekennzeichnet, dass** das weitere Dichtelement (36) benachbart zum ersten Dichtelement (31) angeordnet ist.

5. Leitungsdurchführung nach einem der Ansprüche 1 bis 4, **dadurch gekennzeichnet, dass** ausgehend von einem ersten Ende (16) des Gehäuses (12) zuerst das erste Dichtelement (31) und dann das weitere Dichtelement (36) vorgesehen sind.

6. Leitungsdurchführung nach einem der Ansprüche 1 bis 5, **dadurch gekennzeichnet, dass** metallische Lamellen (26) im Gehäuse (12) vorgesehen sind, die sich vom Gehäuse (12) im Wesentlichen radial in den Durchführraum (13) erstrecken und in axialer Richtung federbar sind sowie ausgehend vom einem ersten Ende (16) des Gehäuses (12) vor dem ersten Dichtelement (31) angeordnet sind.

## Claims

1. Lead-through sleeve for leading pipes, cables, etc. (6) through a construction element (5), with a circumferentially closed casing (12) which surrounds a lead-through space (13) for the pipes, cables, etc. (6), an insert (21) made of intumescent material and a first diaphragm-like seal element (31) made of elastic material with a lead-through point (32) and a further diaphragm-like seal element (36) made of flat textile material with a lead-through opening (37) being provided inside the casing (12), said flat textile material having a transition temperature of at least 600°C, **characterized in that** said flat textile material is a woven glass-fibre fabric provided with a coating, said coating being polyurethane (PU).

2. Lead-through sleeve according to Claim 1, **characterized in that** the flat textile material has a thickness of from 0.1 mm to 1.0 mm.

3. Lead-through sleeve according to Claim 1 or Claim 2, **characterized in that** the lead-through opening (37) of the further seal element (36) is formed from flexible lamellas (38) formed by slits (39) extending radially outwards from the centre of the lead-through opening (37).

4. Lead-through sleeve according to any one of Claims 1 to 3, **characterized in that** the further seal element (36) is located adjacently to the first seal element (31).

5. Lead-through sleeve according to any one of Claims 1 to 4, **characterized in that**, starting from a first end (16) of the casing (12), the first seal element (31) is provided first, and then the further seal element (36) is provided.

6. Lead-through sleeve according to any one of Claims 1 to 5, **characterized in that** metallic lamellas (26) are provided inside the casing (12), extending substantially radially from the casing (12) into the lead-through space (13) and springy in the axial direction and, starting from a first end (16) of the casing (12), located in front of the first seal element (31).

## Revendications

1. Traversée de conduites destinée à faire passer des conduites (6) à travers un composant de construction (5), comportant un boîtier fermé de manière circonférentielle (12) qui entoure un espace de traversée (13) pour les conduites (6), dans laquelle sont prévus un insert (21) constitué d'un matériau intumescent placé dans le boîtier (12) ainsi qu'un premier élément d'étanchéité (31) constitué d'un matériau élastique, analogue à une membrane et muni d'un point de passage (32), et un élément d'étanchéité (36) supplémentaire constitué d'un matériau plat textile, analogue à une membrane et muni d'une ouverture traversante (37), lequel matériau plat a une température de transition d'au moins 600 °C, **caractérisée en ce que** le matériau plat textile est un tissu en fibres de verre qui est pourvu d'un revêtement, le revêtement étant un polyuréthane (PU).

2. Traversée de conduites selon la revendication 1, **caractérisée en ce que** le matériau plat textile a une épaisseur de 0,1 mm à 1,0 mm.

3. Traversée de conduites selon la revendication 1 ou 2, **caractérisée en ce que** l'ouverture traversante (37) de l'élément d'étanchéité supplémentaire (36) est formée par des lamelles souples (38) qui sont formées par des fentes (39) s'étendant radialement vers l'extérieur, à partir du centre de l'ouverture traversante (37).

4. Traversée de conduites selon l'une des revendications 1 à 3, **caractérisée en ce que** l'élément d'étanchéité supplémentaire (36) est agencé au voisinage du premier élément d'étanchéité (31).

5. Traversée de conduites selon l'une des revendications 1 à 4, **caractérisée en ce que**, en partant de la première extrémité (16) du boîtier (12), le premier élément d'étanchéité (31) est d'abord agencé, puis l'élément d'étanchéité supplémentaire (36).

6. Traversée de conduites selon l'une des revendications 1 à 5, **caractérisée en ce que** des lamelles métalliques (26) sont agencées dans le boîtier (12), lesquelles lamelles s'étendent à partir du boîtier (12) de manière sensiblement radiale dans l'espace de traversée (13) et peuvent être élastiques dans la direction axiale et, en partant d'une première extrémité (16) du boîtier (12), sont agencées avant le premier élément d'étanchéité (31).
